# EUROPEAN PATENT SPECIFICATION

(11) **EP 2 077 069 B1**
(45) Date of publication and mention of the grant of the patent: **13.04.2011**
(21) Application number: 08075974.9
(22) Date of filing: 31.12.2008
(51) Int. Cl.: A01G 23/06

(54) **Tree trunk drill**
Baumstumpffräse
Fraise pour broyer des souches

(30) Priority: 04.01.2008 NL 1034891
(43) Date of publication of application: 08.07.2009
(73) Proprietor: B-Inter GmbH, 6300 Zug (CH)
(72) Inventor: Bijl, Abraham Aart, 4855 AK Galder (NL)
(74) Representative: Grootscholten, Johannes A.M.

(56) References cited:
- US-A- 1 012 962
- US-A- 1 164 659
- US-A- 1 534 857
- US-A- 3 818 957

## Description

The present invention relates to a tree stump drill for removing tree stumps. Normally speaking, such a tree stump drill for tree stumps comprises at least one rotatable shaft which can be driven by means of a drive forming part of a vehicle such as a tractor. The tree stump drill further comprises at least one knife extending in radial direction and connected to the shaft.

When the tree stump drill is driven during use, the knife will cut the tree stumps in a helical pattern, after which there remains little more than chippings. The tree stumps are removed effectively per se.

Such known tree stump drills have the drawback however that a relatively heavy embodiment is necessary of a vehicle on which the tree stump drill can be arranged for the purpose of removing tree stumps. A heavy embodiment of a vehicle is necessary to hold the drill centered and to prevent it being able to slip during rotation of the driven shaft when cutting tree stumps. If it should occur that a tree stump drill slips off the tree stumps for removal, it is then almost impossible to then still remove the tree stumps. This is because the tree stump drill will then no longer be able to find any purchase in the slantwise cut remnant of the tree stump. On the other hand it is desirable at many locations to be able to make use of light vehicles, such as tractors, to enable in situ removal of tree stumps when such locations of the tree stumps are difficult to access or when no heavier vehicles for transport of the tree stump drills are available. If the location where tree stumps must be removed is difficult to access, a tree stump drill of another type must then be used, comprising a rotatable disc wheel with protruding knives, wherein the disc wheel is rotated at great speed to cause the knives to act on the tree stumps for removal. Such a tree stump drill was also generally used, also at locations readily accessible to heavy vehicles, in the time that the tree stump drills with knives arranged radially on a rotatable shaft and with a low rotation speed were not yet available. These more recent tree stump drills are safer, precisely because they are used at a low rotation speed, and if desired have a reduction gearbox for this purpose between the motor and the rotatable shaft. The disc wheels rotated at high speed cause an unsafe situation in that wood chippings are flung about at high speed. At locations where heavy vehicles have less ready access, the use of the tree stump drills with a rotatable shaft and radially protruding knives thereon, due to the use thereof at a low rotation speed and associated fuel savings and improvement in safety, is also desirable but has been found not - or not readily - possible.

The known tree stump drills further comprise a guide element. By providing a guide element the tree stump drill can be better centered on the tree stump to be removed, so that sliding or slipping of the tree stump drill over tree stumps can effectively be prevented. It is therefore no longer necessary for this purpose to use heavy embodiments of the vehicles carrying the tree stump drills. Vehicles are then possible which are smaller than traditional heavy tractors, such as lighter tractors, wheel loaders, skid steer loaders, small excavators and so on.

The use of such tree stump drills is thus also desirable at less readily accessible locations in order to improve safety. Because less heavy vehicles can be used here, the fuel consumption can also be decreased. The lighter vehicles can also be utilized at readily accessible locations, and this also generally results in a reduction in fuel consumption. The use of a tree stump drill operated at a low rotation speed in more situations and at more locations also has the further result of a reduction in the wear of, among other parts, the knives. The known tree stump drills thus make it possible to use a lighter vehicle, and the advantages of safety and fuel saving are also provided, and the tree stump drill can also be prevented from slipping off the stumps during cutting.

Tree stump drills having the above described features are known from for example US-3.818.957, which reflects the closest prior art as defined in the preamble of claim 1.

The present invention has for its object to realize an improvement relative to the prior art and/or to obviate or at least alleviate drawbacks of the known tree stump drills, for which purpose a tree stump drill according to the present invention is distinguished in that the guide element is arranged at a distance along the knife, wherein an additional knife is arranged between the knife and the guide element. In such an embodiment the additional knife can have a cutting edge which extends obliquely downward and which extends between the guide element and the knife, and preferably connects in any case to the knife. The orientation of this additional knife is then preferably directed in the rotation direction of the shaft. Such an additional knife prevents damage to or wear of the guide element. The additional knife can itself also be replaceable here, and in any case be releasably mounted on an additional carrier, which then extends for instance between the carrier of the knife and the guide element. The additional knife can have a centering effect when it has for instance a blade disposed in an outward orientation relative to the rotation direction of the shaft. The tree stump drills according to the present invention have many preferred embodiments, of which a selection is defined in the dependent claims. It is for instance possible in an embodiment of the invention for the tree stump drill to comprise at least two knives on the shaft. The process of removing tree stumps can be accelerated by providing more than one knife. Particularly when the at least two knives are arranged at equal angular distances from the shaft, there results a very favourable play of forces with which tree stumps can be removed extremely quickly.

In another preferred embodiment a tree stump drill has the feature that the guide element is annular and is arranged at a distance from and round the shaft. This by no means precludes the present invention also comprising guide elements other than annular ones. A thus designed guide element can be manufactured very easily and arranged on or connected to the already known parts and components of tree stump drills. During use the guide element can hold the tree stump drill centered on the tree stump to be removed, and a lighter embodiment of a vehicle carrying the tree stump drill is thus certainly possible.

In another preferred embodiment the tree stump drill according to the present invention can have the feature that at least one carrier extending in radial direction is arranged on the shaft. Such a carrier can serve to carry diverse components and elements. The knife can thus be coupled releasably to the carrier. This avoids the knife being a fixed component which must be fixedly connected to the shaft, which would result in very time-consuming operations when it is for instance necessary to sharpen the knife. Through being able to couple the knife releasably to the carrier, the knife can be easily removed from the tree stump drill for sharpening or replacement. Another feature associated with the provision of a carrier is that the guide element can be connected to the carrier on the side thereof opposite the shaft. The carrier thus forms a connection between the shaft and the guide element, whereby these components in any case can form a unit which can be assembled in robust manner with known welding techniques. There remains the possible option here that the knives can be connected releasably to some of these components.

In a preferred embodiment of the invention it is possible for a drill element to be arranged on the outer end of the shaft. A drill element can also contribute toward holding a tree stump drill centered, whereby the whole function thereof, particularly when connected to a guide element, can be improved.

In yet another preferred embodiment a tree stump drill according to the invention can have the feature that during use the guide element is disposed behind the knife in the drilling direction. This feature still provide the centering effect, even though the knife acts first on tree stumps, so that the guide element itself does not have the function of acting on tree stumps and can surprisingly still have a guiding function. The advantage is that the guide element must be given a robust form but further does not need to have a destructive effect on tree stumps, and so does not have to be sharpened nor need be replaceable. This also contributes toward an integrated assembly of determined elements and components of the tree stump drill which per se never need to be sharpened or even need to be replaceable.

In yet another preferred embodiment a tree stump drill according to the present invention has the feature that at least one protrusion is arranged on the guide element, which protrusion is oriented toward the shaft in a direction away from the knife. A kind of partial cone shape or converging shape can thus be realized in a direction away from the tree stump to be removed, whereby an directing, centering action, or at least an improvement thereof, is provided. Such a protrusion can be cheek-shaped and a plurality of protrusions can be arranged at preferably equal angular distances round the shaft. It is even possible to work not with actual protrusions but with a cone section. It has been found, astonishingly, that such a protrusion, particularly though not exclusively if it is cheek-shaped or cone section-shaped, can display a directing or aligning action, even in this embodiment in which the protrusion is arranged at a distance behind the knife extending radially from the shaft relative to the direction in which the tree stump drill is moved in order to remove stumps (the drilling direction). The protrusion does after all only rotate here in residues of stumps. This has the simultaneous advantage that in this position the protrusions are not susceptible to wear, or hardly so.

The position of the protrusion inclining toward the shaft in the direction away from the knife moreover has another inventive effect. When the tree stump drill in this embodiment of the invention is applied for operation on stumps of a larger size than the range of operation defined by the knife protruding radially from the shaft, it can occur that the tree stump drill sinks into the root system of stumps after having drilled completely through the trunk, and sinks into the root system under the trunk and could become jammed therein. In an embodiment of the invention without protrusion(s) the tree stump drill must then be dug out, or a second tree stump drill must be employed to release the first jammed drill. The protrusion with the thus defined orientation has on the other hand the inventive consequence that in such a situation the tree stump drill can be easily retracted without it becoming jammed in the root system or getting caught therein. This is particularly favourable when the vehicle is light, such as a light embodiment of a tractor for the purpose of being able to reach remote locations, which vehicle would not be able per se to generate the force required to retract the tree stump drill on the basis of brute force.

In an embodiment other than one with an annular guide element or, as addition thereto, a single or multiple annular guide element, use can further be made of a guide element with catching arms for holding the drill centered on the tree stump. The catching arms can have a converging action in radial direction relative to the shaft as addition to or as alternative to the optionally cone section-shaped protrusion. Guide elements other than annular ones can moreover also be applied.

In another additional or alternative embodiment the tree stump drill can further have the feature of a wear element on the guide element for the purpose of protecting the guide element from wear. This can particularly be an addition or alternative to the measure that the guide element is disposed behind the knife. Such wear elements are preferably arranged or can be arranged releasably and/or exchangeably on the guide element. For this purpose such a wear element can be arranged in parts on the guide element, wherein the guide element is preferably protected along the whole form thereof from the action of for instance wood and/or stones.

The present invention will be further described hereinbelow on the basis of the accompanying figures in which several embodiments of tree stump drills according to the present invention are shown, and in which the same reference numerals are applied for the same or similar components, elements and features, and in which:
fig. 1 shows a tree stump drill when connected to a vehicle during the removal of a tree stump;
fig. 2 is a partially cut-away perspective view of a tree stump drill according to the present invention;
fig. 3 is a perspective view of an alternative embodiment of a tree stump drill according to the present invention; and
fig. 4 is a perspective view of a part of an alternative or additional embodiment of a tree stump drill according to the present invention.

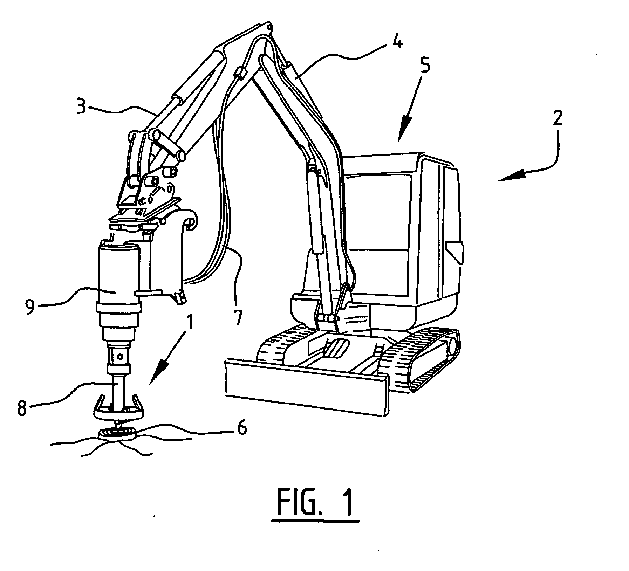

Fig. 1 shows a tree stump drill 1 in use when connected to a vehicle in the form of a light tractor 2. Tree stump drill 1 is suspended from the front part of the light tractor 2 and is centered on a tree stump 6 for removal by a user in cab 5 using cylinders 3 and 4. Tree stump drill 1 is further coupled to a motor 9 connected via hoses 7 to the hydraulics of tractor 2. Hose 7 is coupled to tractor 2 for the purpose of driving tree stump drill 1 via drive shaft 8.

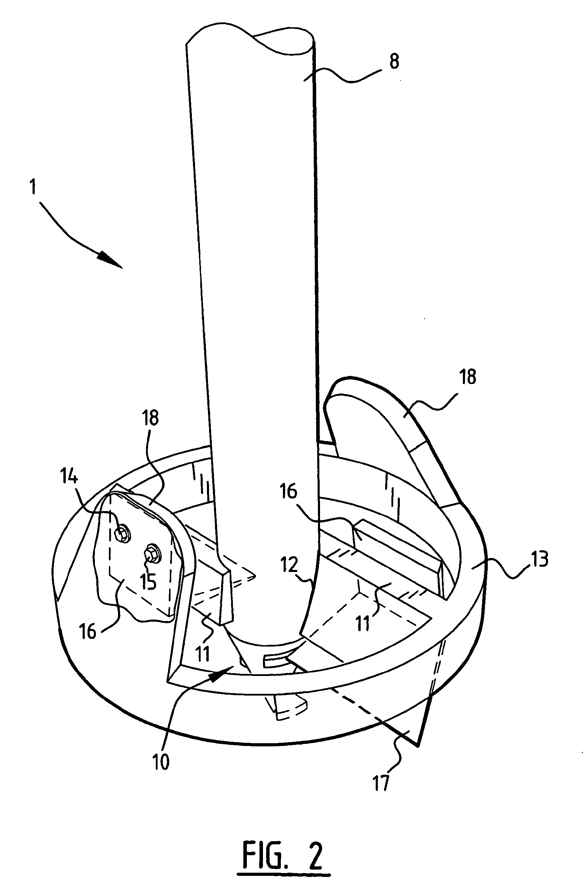

Fig. 2 shows tree stump drill 1 of fig. 1 in more detail. Tree stump drill 1 comprises a rotatable shaft 8 connected to a gearbox 9 in fig. 1. Tree stump drill 1 further comprises a drilling element 10 on the outer end thereof. Two carriers 11 extending substantially in radial direction are arranged above drilling element 10, for instance by means of a welded connection 12. An annular guide element 13 is provided on the sides of carriers 11 opposite shaft 8.

Arranged on carriers 11 with bolts 14, 15 are L-shaped plates 16, of which the edges 17 oriented in downward direction are chamfered in order to form knives. L-shaped plates 16 can be replaced or released for sharpening by means of bolts 14, 15.

Annular guide 13 is provided on the upper edge thereof with cheek-shaped protrusions 18 which are oriented toward shaft 8 in upward direction away from knives 16, 17.

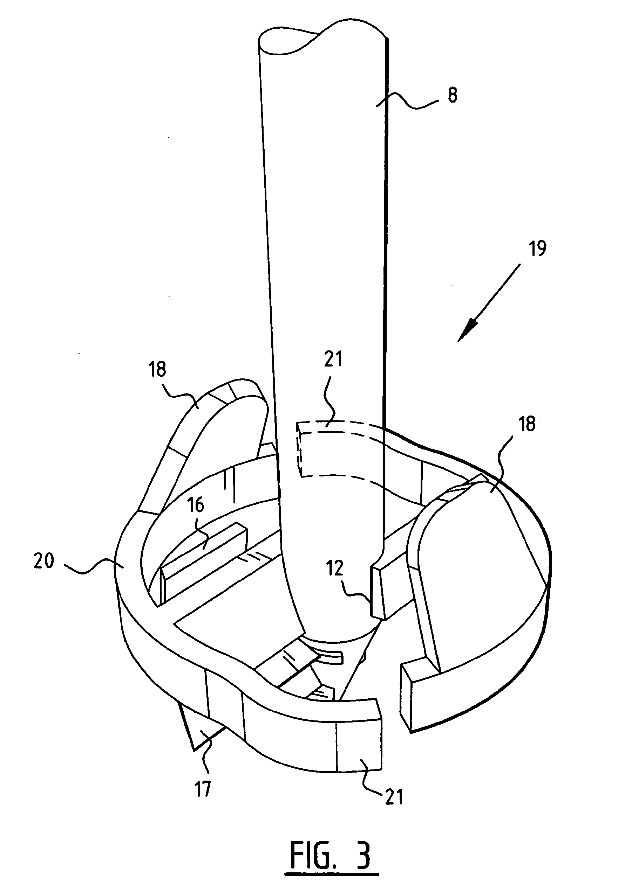

Fig. 3 shows an alternative embodiment of a tree stump drill 19 according to the present invention. This differs from tree stump drill 1 shown in fig. 2 substantially in that guide element 20 does not form a closed ring but comprises protruding catching arms 21. These catching arms 21 can be formed by cutting through an annular guide element 13 as shown in fig. 2 at chosen positions on the periphery thereof and bending outward as shown in fig. 3.

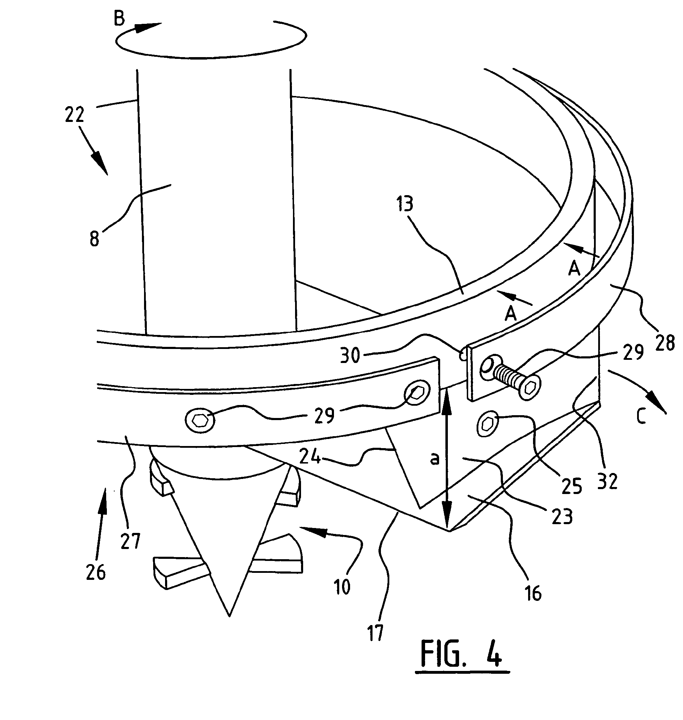

In the alternative or additional embodiment of a tree stump drill 22 shown in fig. 4 the annular guide element 13 is arranged at a distance a along the knife 16 with sharpened edge 17, wherein an additional knife 23 is arranged between the knife and the guide element. The additional knife 23 has a cutting edge 24 which extends obliquely downward and which extends between guide element 13 and knife 16 and connects onto knife 16. The orientation of this additional knife 23 is directed in the rotation direction B of the shaft. In the shown embodiment the rear side 32 of knife 23 is rotated outward in the direction of arrow C. The cutting edge is therefore then turned inward, and improved centering is thereby realized.

Such an additional knife 23 prevents damage to or wear of guide element 13. The additional knife 23 can itself also be mounted here for replacement and release with bolt 25 on an additional carrier (not shown) which then extends for instance between carrier 11 of knife 16 and guide element 13. The additional knife 23 has a centering action because it is disposed in an outward orientation relative to the rotation direction B of shaft 8 on the rear side thereof, this being shown schematically with arrow C.

The tree stump drill 22 shown in fig. 4 has the further feature of a wear element 26 formed from at least two parts 27, 28 on guide element 13 for the purpose of protecting guide element 13 from wear. Wear element 26 is as it were sacrificed for wear in order to spare guide element 13. Such wear elements 26 are preferably arranged or can be arranged releasably and/or exchangeably on the guide element, as shown in figure 4 with bolts 29 which can be mounted into threaded holes 30 in guide element 13. For this purpose this wear element 26 is arranged in two parts 27, 28 on guide element 13, wherein guide element 13 is protected along the whole outer contour form, and in particular also lower edge 31 thereof, from the effect of for instance wood and/or stones.

It is otherwise noted that many additional and alternative embodiments will occur to the skilled person after examination of the foregoing disclosure of the present invention, which alternative and additional embodiments must all be deemed as embodiments of the invention as these are defined in the appended claims, unless such alternative and additional embodiments depart from the letter or spirit of these claims. It is thus possible for the guide element not to be annular, or even not to form a ring with catching arms as in fig. 3, but that use is made of a diamond-shaped, rectangular, square, oval etc. guide element. In the described and shown embodiments the guide element is disposed in each case in the direction of operation of the tree stump drill above the knife-forming cutting edges 17, but it is equally possible in some embodiments of a tree stump drill according to the invention for a guide element to the disposed under the knives. The annular guide 13 as shown in fig. 2 can be understood as a section of a cylinder, and the cheek-shaped protrusions 18 as cone sections. It is likewise possible to make use of a guide element with the form of a truncated cone in the lengthwise direction relative to rotatable shaft 8. The wear element can be formed from a single part, and the form thereof can be adapted to that of the guide element, or even differ therefrom, as required for the protection of the guide element. It will thus be apparent that embodiments not described explicitly lie within the scope of the normal professional knowledge of the skilled person and also within the scope of protection of the present invention.

## Claims

1. Tree stump drill (1; 19; 22) for removing tree stumps, comprising:
- a rotatable shaft (8);
- at least one knife (16, 17) extending in radial direction and connected to the shaft; and
- a guide element (13, 20),
**CHARACTERIZED IN THAT**
the guide element is arranged at a distance along the at least one knife, and an additional knife (23) is arranged between the at least one knife and the guide element.

2. Tree stump drill as claimed in claim 1, comprising at least two knives (16, 17) on the shaft.

3. Tree stump drill as claimed in claim 2, wherein the at least two knives (16, 17) are arranged at equal angular distances round the shaft (8).

4. Tree stump drill as claimed in at least one of the foregoing claims, wherein the guide element (13; 20) is annular and is arranged at a distance from and round the shaft (8).

5. Tree stump drill as claimed in at least one of the foregoing claims, wherein at least one carrier (11) extending in radial direction is arranged on the shaft.

6. Tree stump drill as claimed in claim 5, wherein the knife (16, 17) is coupled releasably to the carrier (11).

7. Tree stump drill as claimed in claim 5 or 6, wherein
the guide element (13, 20) is connected to the carrier (11) on the side thereof opposite the shaft.

8. Tree stump drill as claimed in at least one of the foregoing claims, wherein a drill element (10) is arranged on the outer end of the shaft (8).

9. Tree stump drill as claimed in at least one of the foregoing claims, wherein during use the guide element (13, 20) is disposed behind the knife (16, 17) in the drilling direction.

10. Tree stump drill as claimed in at least one of the foregoing claims, wherein at least one protrusion (18) is arranged on the guide element (13, 20), which protrusion is oriented toward the shaft (8) in a direction away from the knife (16, 17).

11. Tree stump drill as claimed in claim 10, wherein the protrusion (18) is cheek-shaped.

12. Tree stump drill as claimed in claim 10 or 11, wherein at least two protrusions (18) are arranged, which are arranged at equal angular distances round the shaft (8).

13. Tree stump drill as claimed in at least one of the foregoing claims, wherein the guide element (13, 20) comprises catching arms (21) for holding the drill centered on tree stumps.

14. Tree stump drill as claimed in at least one of the foregoing claims, wherein a wear element (28) is arranged on the guide (13; 20).

## Patentansprüche

1. Baumstumpfbohrer (1; 19; 22) zum Entfernen von Baumstümpfen, umfassend:
- eine rotierbare Welle (8);
- wenigstens eine Klinge (16, 17), die sich in radialer Richtung erstreckt und mit der Welle verbunden ist; und
- ein Führungselement (13, 20),
**dadurch gekennzeichnet, dass**
das Führungselement in einem Abstand längs der wenigstens einen Klinge angeordnet ist und eine zusätzliche Klinge (23) zwischen der wenigstens einen Klinge und dem Führungselement angeordnet ist.

2. Baumstumpfbohrer nach Anspruch 1, wenigstens zwei Klingen (16, 17) auf der Welle umfassend.

3. Baumstumpfbohrer nach Anspruch 2, bei welchem die wenigstens zwei Klingen (16, 17) in gleichen Winkelabständen um die Welle (8) herum angeordnet sind.

4. Baumstumpfbohrer nach wenigstens einem der vorstehenden Ansprüche, bei welchem das Führungselement (13; 20) ringförmig ist und in einem Abstand von und um die Welle (8) herum angeordnet ist.

5. Baumstumpfbohrer nach wenigstens einem der vorstehenden Ansprüche, bei welchem wenigstens ein Träger (11), der sich in radialer Richtung erstreckt, auf der Welle angeordnet ist.

6. Baumstumpfbohrer nach Anspruch 5, bei welchem die Klinge (16, 17) lösbar mit dem Träger (11) gekoppelt ist.

7. Baumstumpfbohrer nach einem der Ansprüche 5 oder 6, bei welchem das Führungselement (13, 20) mit dem Träger (11) auf der Seite verbunden ist, die der Welle gegenüberliegt.

8. Baumstumpfbohrer nach wenigstens einem der vorstehenden Ansprüche, bei welchem ein Bohrelement (10) an dem äußeren Ende der Welle (8) angeordnet ist.

9. Baumstumpfbohrer nach wenigstens einem der vorstehenden Ansprüche, bei welchem während einer Verwendung das Führungselement (13, 20) hinter der Klinge (16, 17) in der Bohrrichtung angeordnet ist.

10. Baumstumpfbohrer nach wenigstens einem der vorstehenden Ansprüche, bei welchem wenigstens ein Vorsprung (18) auf dem Führungselement (13, 20) angeordnet ist, wobei der Vorsprung in Richtung der Welle (8) in einer Richtung weg von der Klinge (16, 17) ausgerichtet ist.

11. Baumstumpfbohrer nach Anspruch 10, bei welchem der Vorsprung (18) backenförmig ist.

12. Baumstumpfbohrer nach einem der Ansprüche 10 oder 11, bei welchem wenigstens zwei Vorsprünge (18) angeordnet sind, die in gleichen Winkelabständen um die Welle (8) herum angeordnet sind.

13. Baumstumpfbohrer nach wenigstens einem der vorstehenden Ansprüche, bei welchem das Führungselement (13, 20) Fangarme (21) zum zentrierten Halten des Bohrers auf Baumstümpfen umfasst.

14. Baumstumpfbohrer nach wenigstens einem der vorstehenden Ansprüche, bei welchem ein Verschleißelement (28) auf der Führung (13; 20) angeordnet ist.

## Revendications

1. Fraise pour broyer des souches (1 ; 19 ; 22) pour
retirer des souches, comprenant :
un arbre rotatif (8) ;
au moins une lame (16, 17) s'étendant dans une direction radiale et raccordée à l'arbre ; et
un élément de guidage (13, 20),
**caractérisée en ce** qui :
l'élément de guidage est agencé à une distance le long de la au moins une lame, et une lame supplémentaire (23) est agencée entre la au moins une lame et l'élément de guidage.

2. Fraise pour broyer des souches selon la revendication 1, comprenant au moins deux lames (16, 17) sur l'arbre.

3. Fraise pour broyer des souches selon la revendication 2, dans laquelle les au moins deux lames (16, 17) sont agencées à des distances angulaires égales autour de l'arbre (8).

4. Fraise pour broyer des souches selon l'une quelconque des revendications précédentes, dans laquelle l'élément de guidage (13 ; 20) est annulaire et est agencé à une distance de et autour de l'arbre (8).

5. Fraise pour broyer des souches selon au moins l'une quelconque des revendications précédentes, dans laquelle au moins un support (11) s'étendant dans la direction radiale est agencé sur l'arbre.

6. Fraise pour broyer des souches selon la revendication 5, dans laquelle la lame (16, 17) est couplée de manière amovible au support (11).

7. Fraise pour broyer des souches selon la revendication 5 ou 6, dans laquelle l'élément de guidage (13, 20) est raccordé au support (11) sur son côté opposé à l'arbre.

8. Fraise pour broyer des souches selon l'une quelconque des revendications précédentes, dans laquelle un élément de fraise (10) est agencé sur l'extrémité externe de l'arbre (8).

9. Fraise pour broyer des souches selon l'une quelconque des revendications précédentes, dans laquelle, pendant l'utilisation, l'élément de guidage (13, 20) est disposé derrière la lame (16, 17) dans la direction de fraisage.

10. Fraise pour broyer des souches selon l'une quelconque des revendications précédentes, dans laquelle au moins une saillie (18) est agencée sur l'élément de guidage (13, 20), laquelle saillie est orientée vers l'arbre (8) dans une direction à distance de la lame (16, 17).

11. Fraise pour broyer des souches selon la revendication 10, dans laquelle la saillie (18) est en forme de joue.

12. Fraise pour broyer des souches selon la revendication 10 ou 11, dans laquelle on agence au moins deux saillies (18), lesquelles sont agencées à des distances angulaires égales autour de l'arbre (8).

13. Fraise pour broyer des souches selon l'une quelconque des revendications précédentes, dans laquelle l'élément de guidage (13, 20) comprend des bras preneurs (21) pour maintenir la fraise centrée sur les souches.

14. Fraise pour broyer des souches selon l'une quelconque des revendications précédentes, dans laquelle un élément d'usure (28) est agencé sur le guide (13 ; 20).
